# EUROPÄISCHE PATENTANMELDUNG

(11) **EP 2 647 454 A1**
(43) Veröffentlichungstag der Anmeldung: **09.10.2013**
(21) Anmeldenummer: 13160437.3
(22) Anmeldetag: 21.03.2013
(51) Int. Cl.: B23B 29/034, B23G 5/14

(54) **Werkzeug zur Materialbearbeitung**

(30) Priorität: 02.04.2012 DE 102012006592
(71) Anmelder: LEISTRITZ PRODUKTIONSTECHNIK GMBH, 90459 Nürnberg (DE)
(72) Erfinder: Theusner, Klaus, 34414 Warburg (DE); Lange, Jürgen, 90763 Fürth (DE); Vater, Bernhard, 92714 Pleystein (DE)
(74) Vertreter: Blaumeier, Jörg

(57) **Zusammenfassung**

Werkzeug zur Materialbearbeitung, umfassend einen länglichen Werkzeugkörper mit mehreren radial abstehenden Schneidelementen, wobei im Werkzeugkörper (2) stirnseitig eine Bohrung (7) vorgesehen ist, in die Radialdurchbrechungen (11) münden, in denen die Schneidelemente (5) längsbeweglich aufgenommen sind, in welcher Bohrung (7) ein Einstellelement (6) längsbeweglich aufgenommen ist, das einen konischen Stellabschnitt (20) aufweist, an dem die Schneidelemente (5) anliegen, wobei das Einstellelement (6) und die Schneidelemente (5) in der Einstellposition arretierbar sind.

## Beschreibung

Die Erfindung betrifft ein Werkzeug zur Materialbearbeitung, umfassend einen länglichen Werkzeugkörper mit mehreren radial abstehenden Schneidelementen.

Derartige Werkzeuge werden überall dort verwendet, wo eine materialabhebende Werkstückbearbeitung erforderlich ist. Sie dienen beispielsweise zum Bohren, Gewindebohren, Fräsen oder Innenwirbeln. Zumeist werden mit solchen Werkzeugen Metallgegenstände bearbeitet, gleichermaßen können damit aber auch beliebige andere Materialien wie Holz oder Kunststoff bearbeitet werden.

Das Werkzeug umfasst einen länglichen, zumeist im Wesentlichen zylindrischen Werkzeugkörper, der endseitig einen Aufnahmeabschnitt aufweist, über den er in einem Werkzeughalter einer Werkzeugmaschine befestigbar ist. Vom Werkzeugkörper stehen zumeist mehrere Schneidelemente radial ab, wobei die Schneidelemente das Material abheben. Die Schneidelemente sind entsprechend der vorzunehmenden Bearbeitungsaufgabe ausgebildet, das heißt, dass, je nachdem, ob gebohrt, gefräst oder gewirbelt werden soll, entsprechende spezifische Schneidelemente verwendet werden. Diese sind üblicherweise auswechselbar in entsprechenden Schneidelementaufnahmen am Werkzeugkörper angeordnet, wo sie über geeignete Arretierelemente fixiert werden können. Im Rahmen dieser Schneidelementpositionierung erweist es sich jedoch als mitunter schwierig, die Schneidelemente exakt zu positionieren, mithin also sicherzustellen, dass alle auf einem gemeinsamen Schneidradius liegen. Dies bedarf mitunter einer aufwändigen Justage, was umständlich und zeitaufwändig ist.

Der Erfindung liegt damit das Problem zugrunde, ein Werkzeug anzugeben, das eine einfache Justage der Schneidelemente ermöglicht.

Zur Lösung dieses Problems ist bei einem Werkzeug der eingangs genannten Art erfindungsgemäß vorgesehen, dass im Werkzeugkörper stirnrseitig eine Bohrung vorgesehen ist, in die Radialdurchbrechungen münden, in denen die Schneidelemente längsbeweglich aufgenommen sind, in welcher Bohrung ein Einstellelement längsbeweglich aufgenommen ist, das einen konischen Stellabschnitt aufweist, an dem die Schneidelemente anliegen, wobei das Einstellelement und die Schneidelemente in der Einstellposition arretierbar sind.

Das erfindungsgemäße Werkzeug weist im Werkzeugkörper eine zentrale, längs der Drehachse in den Körper geführte Bohrung auf, in der ein längsbewegliches und in einer gewünschten Position arretierbares Einstellelement aufgenommen ist. Dieses Einstellelement weist einen konischen Stellabschnitt auf, der der simultanen und gleichförmigen Verstellung aller werkzeugkörperseitigen Schneidelemente dient. Die Schneidelemente sind in entsprechenden Radialdurchbrechungen im Werkzeugkörper längsbeweglich angeordnet, wobei die Radialdurchbrechungen in die Bohrung münden, so dass die Schneidelemente mit ihren bohrungsseitigen Enden letztlich in die Bohrung eingreifen bzw. am konischen Stellabschnitt des Einstellelements anliegen. Soll nun eine Schneidelementverstellung vorgenommen werden, so geschieht dies auf einfache Weise dadurch, dass das Einstellelement je nachdem, ob die Schneidelemente weiter nach außen bewegt oder weiter nach innen bewegt werden sollen, entsprechend der Verlaufsrichtung des konischen Stellabschnitts in der Bohrung längsbewegt wird. Der Stellabschnitt wandert dabei längs der Bohrungsachse, er bewegt sich also relativ zu den axial gesehen lagefesten Schneidelementen, die dadurch, je nach Bewegungsrichtung, entweder weiter nach außen bewegt werden oder weiter in Richtung der Bohrung zurückbewegt werden. In der gewünschten Einstellposition wird sodann das Einstellelement wie natürlich auch jedes einzelne Schneidelement arretiert. Die Schneidelemente können zwangsgeführt radial nach außen gedrückt werden, zur Bewegung radial nach innen sind die Schneidelemente von Hand einzudrücken, den Bewegungsweg limitiert das Einstellelement.

Ersichtlich ist folglich der Justiervorgang, also die Einstellung der Radialposition der einzelnen Schneidelemente simultan und auf äußerst einfache Weise möglich. Denn es ist lediglich erforderlich, das Einstellelement längs der Bohrung zu bewegen, bis die Schneidelemente auf dem gewünschten Radius liegen, was auf einfache Weise über eine geeignete Einstellschablone oder Ähnliches überprüft werden kann. Anschließend ist lediglich noch die Arretierung der einzelnen Bauteile vorzunehmen, wonach die Justage abgeschlossen ist.

Für eine einfache Längsbewegung des Einstellelements ist dieses bevorzugt in der Bohrung verschraubbar geführt, wozu in der Bohrung ein Innengewinde ausgebildet ist, in das das Einstellelement über ein Außengewinde einschraubbar ist. Das heißt, dass zur Axialbewegung das Einstellelement auf einfache Weise tiefer in oder weiter aus der Bohrung geschraubt wird, was besonders einfach dadurch erfolgen kann, dass mit einem Stellwerkzeug, beispielsweise einem Inbusschlüssel, an einer entsprechenden Aufnahme an der freiliegenden Stirnfläche des Einstellelements angegriffen werden kann.

Die Gewindeführung selbst, also das Innen- und das Außengewinde sind bevorzugt als Feingewinde ausgebildet. Die Steigung sollte relativ gering sein, sie sollte entweder 1 oder weniger, beispielsweise 0,5 betragen, was vorteilhaft ist, da dann eine Selbsthemmung gegeben ist.

Die Gewindeverbindung befindet sich tief im Inneren der Bohrung, wobei das Außengewinde am vorlaufenden, in die Bohrung einzuführenden Ende des Einstellelements ausgebildet ist. Nicht zuletzt aus diesem Grund ist es deshalb möglich, den konischen Stellabschnitt am nachlaufenden, in die Bohrung einzuführenden Ende vorzusehen, wie auch die Radialdurchbrechungen stirnflächennahe ausgebildet sind. Das heißt, dass am Werkzeugkörper die Schneidelemente nahestmöglich an der freiliegenden Stirnfläche, die vorlaufend an und in das Werkstück geführt wird, vorgesehen sind, mithin also auch die Möglichkeit gegeben ist, möglichst tief in ein Werkstück eintauchen zu können.

Um eine möglichst feine Verstellung der Schneidelemente zu ermöglichen, sollte der Konuswinkel des Stellabschnitts kleiner 10° sein, vorzugsweise sollte er kleiner 8°, insbesondere kleiner 6° sein. Da das Einstellelement lösbar im Werkzeugkörper aufgenommen ist, ist es im Übrigen ohne weiteres möglich, es bei Bedarf gegen ein anderes Einstellelement, das beispielsweise einen etwas steileren oder flacheren Konuswinkel als das zuvor verbaute Einstellelement aufweist, auszutauschen.

Da das Einstellelement das zentrale Bauteil ist, das der gemeinsamen Schneidelementverstellung dient, ist es erforderlich, eine sichere Lagerung und Führung des Einstellelements in der Bohrung sicherzustellen. Zu diesem Zweck ist mit besonderem Vorteil wenigstens ein zylindrischer Führungsabschnitt am Einstellelement vorgesehen, der der Linearführung des Einstellelements in der Bohrung dient. Über diesen zylindrischen Führungsabschnitt liegt das Einstellelement bohrungsinnenseitig an oder ist mit geringstmöglichem Spiel in der Bohrung aufgenommen, so dass eine sichere Führung bei Ausschluss einer seitlichen Verkippung gegeben ist.

Besonders bevorzugt sind zwei axial voneinander über eine Ringnut beabstandete Führungsabschnitte vorgesehen, die beide der Linearführung dienen, wobei am Werkzeugkörper eine in der Ringnut mündende, vorzugsweise radiale, Bohrung, insbesondere eine Gewindebohrung zur Aufnahme eines zur Arretierung des Einstellelements in der Einstellposition am Ringnutgrund angreifenden Arretierelements, insbesondere eine Arretierschraube vorgesehen ist. Über diese beiden axial voneinander beabstandeten zylindrischen Führungsabschnitte, die beide der Linearführung und damit auch Lagerung des Einstellelements dienen, ist, axial gesehen, eine Zwei-Punkt-Führung respektive Lagerung gegeben. Die beiden Führungsabschnitte sind bevorzugt um die Längsmitte des Einstellelements positioniert, so dass die Ringnut quasi längsmittig am Einstellelement ausgebildet ist. In diese Ringnut mündet nun eine Radialbohrung, insbesondere in Form einer Gewindebohrung, in die ein Arretierelement, vornehmliche eine Arretierschraube, eingesetzt wird. Diese dient der Arretierung des Einstellelements in der Einstellposition, wozu das Arretierelement am Ringnutgrund angreift. Im Falle einer Arretierschraube wird diese also soweit in die Gewindebohrung eingeschraubt, bis sie fest am Nutgrund aufliegt, mithin also das Einstellelement in der Einstellposition kontert und arretiert. Die Führungsabschnitte selbst weisen eine gewisse axiale Länge auf, so dass eine relativ große zylindrische Führungsfläche gegeben ist.

In Weiterbildung der Erfindung ist vorgesehen, dass in jede ein Schneidelement aufnehmende Radialdurchbrechung eine Bohrung, insbesondere ebenfalls eine Gewindebohrung, zur Aufnahme eines zur Arretierung eines Schneidelements in der Einstellposition am Schneidelement angreifenden Arretierelements, insbesondere einer Arretierschraube, mündet. Sind durch Einstellung des Einstellelements auch die Schneidelemente wie gewünscht positioniert, so ist es zur Arretierung derselben lediglich erforderlich, beispielsweise die Arretierschraube in die Gewindebohrung einzuschrauben, so dass sie an den Schneidelementen angreift, diese also kontern und damit arretieren. Dabei können die jeweiligen Bohrungen, wie bevorzugt, tangential verlaufen, mithin also tangential in die Werkzeugkörpermantelfläche geführt sein, so dass sie seitlich am Schneidelementkörper angreifen. Alternativ ist es denkbar, die Bohrungen auch von der Stirnseite kommend axial zu führen, das heißt, dass die Arretierschrauben von der Stirnseite her eingeschraubt werden. Bei dieser Erfindungsalternative ist es jedoch nicht möglich, die Schneidelemente so nah an der Stirnseite anzuordnen wie bei der tangentialen Bohrungsanordnung. Denn bei stirnseitiger Anordnung der Gewindebohrungen ist dort hinreichend Material vorzuhalten, um das Gewinde ausbilden zu können, was bei tangentialem Bohrungsverlauf nicht erforderlich ist, da die Bohrungen quasi von der Seite in den Werkzeugkörper geführt sind. Anstelle einer Gewindebohrung nebst Arretierschraube ist es auch denkbar, zur Schneidelementfixierung einen in einer Bohrung geführten Keil oder einen Exzentermechanismus, womit ebenfalls eine Klemmung des Schneidelements möglich ist, zu verwenden.

Bevorzugt sind am Werkzeugkörper wenigstens zwei um 180° versetzt angeordnete Schneidelemente vorgesehen, es können drei um 120° versetzt angeordnete Schneidelemente vorgesehen sein, aber natürlich auch mehr als drei Schneidelemente, z.B. vier um 90° angeordnete Schneidelemente.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Seitenansicht eines erfindungsgemäßen Werkzeugs in Form eines Gewindebohrers,
- Fig. 2: eine Stirnseitenansicht des Werkzeugs aus Fig. 1,
- Fig. 3: eine Schnittansicht durch den Werkzeugkörper des Werkzeugs aus Fig. 1
- Fig. 4: eine Seitenansicht des Einstellelements des Werkzeugs aus Fig. 1,
- Fig. 5: eine Stirnseitenansicht des Einstellelements aus Fig. 4,
- Fig. 6: eine Schnittansicht durch das erfindungsgemäße Werkzeug aus Fig. 1, und
- Fig. 7: eine Perspektivansicht des Werkzeugs aus Fig. 1, wobei zur Übersichtlichkeit der Werkzeugkörper nicht gezeigt ist, sondern lediglich das Einstellelement, die Schneidelemente sowie die diversen Arretierelemente.

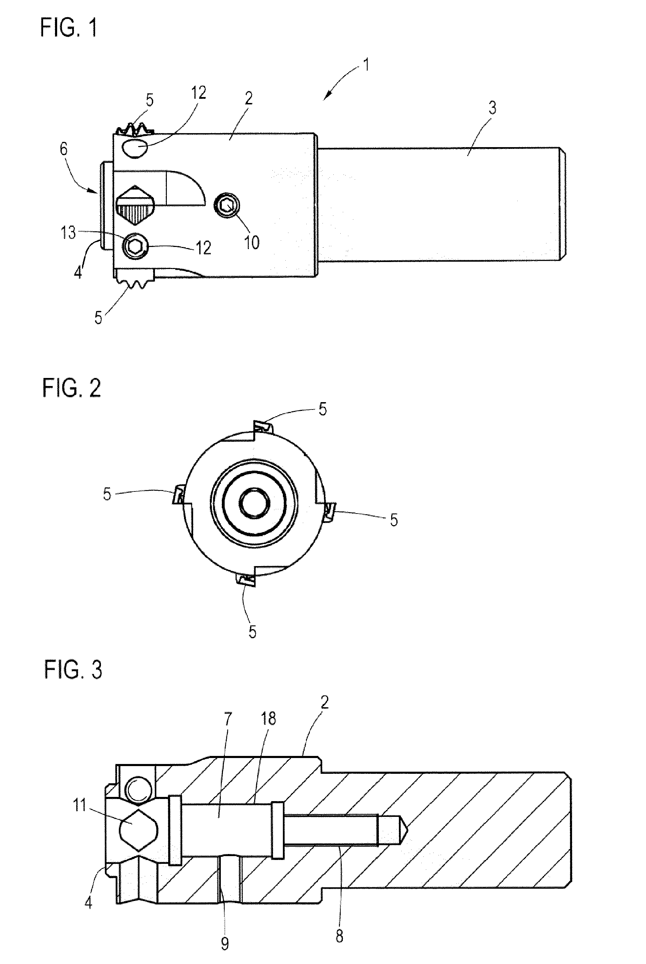

Fig. 1 zeigt ein erfindungsgemäßes Werkzeug 1, umfassend einen Werkzeugkörper 2, an dessen hinterem Ende ein Befestigungsabschnitt 3 zur Aufnahme und Fixierung in einem Werkzeughalter ausgebildet ist. Am im Wesentlichen zylindrischen Wäerkzeugkörper 2 sind am vorlaufenden Ende nahe der Stirnfläche 4 im gezeigten Beispiel vier Schneidelemente 5 um 90° versetzt zueinander angeordnet. Die Schneidelemente stehen radial hervor, siehe Fig. 2, sie dienen der Durchführung der materialabhebenden Bearbeitung. Die Schneidelemente sind in entsprechenden Radialdurchbrechungen des Werkzeugkörpers 2 geführt, worauf Nachfolgend noch eingegangen wird, sie werden über geeignete Arretierelemente in der gewünschten Einstellposition arretiert. Der gemeinsamen, simultanen Einstellung aller Schneidelemente 5 dient ein Einstellelement 6, das in den Werkzeugkörper 2 geführt ist, und das nachfolgend ebenfalls im Detail beschrieben wird.

Fig. 3 zeigt eine Schnittansicht durch den Werkzeugkörper 2. Dieser weist eine axial verlaufende, von der Stirnseite 4 eingeführte Bohrung 7 auf, die in der Tiefe ein Innengewinde 8 aufweist. In die Bohrung 7 mündet eine weitere radiale Bohrung 9, die der Aufnahme eines Arretierelements in Form einer Arretierschraube 10 dient (siehe Fig. 1), die, worauf nachfolgend noch eingegangen wird, der Fixierung des Einstellelements 6 dient.

Im Bereich der Stirnfläche 4 sind ferner Radialdurchbrechungen 11 vorgesehen, die der Aufnahme jeweils eines Schneidelements 5 dienen, wobei die Querschnittsform der Radialdurchbrechung 11 im Wesentlichen der Querschnittsform eines Schneidelements im Bereich des Schneidkörpers, also unterhalb der eigentlichen Schneidfläche, entspricht, so dass eine weitgehende formschlüssige Längsführung eines jeden Schneidelements 5 in der Radialdurchbrechung 11 gegeben ist. Tangential am Werkzeugkörper 2 sind ferner Bohrungen 12 zu jeweils einer Radialdurchbrechung 11 geführt, in welcher Bohrung 12 jeweils wiederum ein Arretierelement in Form einer Arretierschraube 13 aufgenommen ist. Diese Arretierschraube 13 dient der Arretierung des in der zugeordneten Radialdurchbrechung 11 aufgenommenen Schneidelements 5 in der Einstellposition.

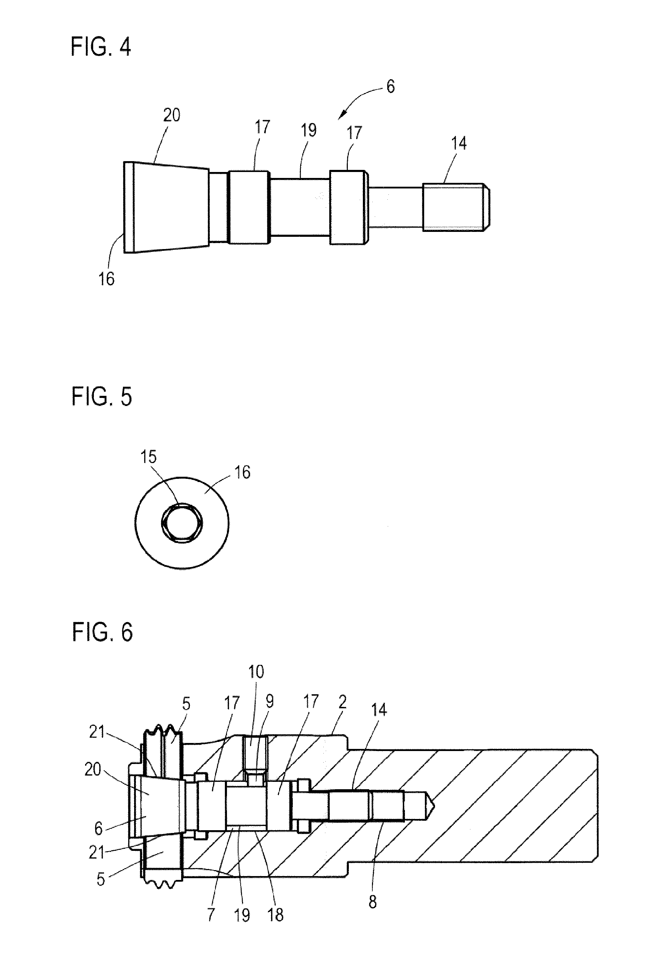

Zentrales Element der simultanen Schneidelementverstellung ist das Einstellelement 6, das im Detail in Fig. 4 und 5 gezeigt ist. Das Einstellelement 6 ist quasi eine Einstellschraube, es weist am vorlaufend in die Bohrung 7 eingeführten Ende ein Außengewinde 14 auf, das in das Innengewinde 8 der wekzeugkörperseitigen Bohrung 7 eingeschraubt wird. Hierüber wird die Linearbewegung des Einstellelements 6 in der Bohrung 7 realisiert, zur Längsverstellung ist es lediglich erforderlich, mit einem geeigneten Stellwerkzeug, hier einem Inbuswerkzeug, in einer entsprechenden Aufnahme 15 an der Stirnfläche 16 des Einstellelements 6 anzugreifen. Außengewinde 14 und Innengewinder 8 sind als Feingewinde mit einer geringen Steigung, vorzugsweise < 1, z. B. von 0,5 ausgebildet.

Am Einstellelement 6 sind ferner zwei axial voneinander beabstandete zylindrische Führungsabschnitte 17 vorgesehen, die in der Montagestellung in dem im Durchmesser erweiterten zylindrischen Bereich 18 der Bohrung 7 aufgenommen sind. Sie sind dort formschlüssig oder mit minimalstem Spiel aufgenommen und dienen der Linearführung wie auch der Lagerung des Einstellelements in der Bohrung 7. Zwischen beiden Führungsabschnitten 17 ist eine Ringnut 19 ausgebildet. In diese mündet die radiale Bohrung 9, bei der es sich um eine Gewindebohrung handelt, in die die Arretierschraube 10 geschraubt ist. Die Arretierschraube 10 greift zum Arretieren des Einstellelements 6 in der gewünschten Einstellposition am Nutgrund der Ringnut 19 an.

Ferner ist am Einstellelement 6 ein konischer Stellabschnitt 20 vorgesehen, der im Bereich der Stirnfläche 16 vorgesehen ist, und der in der Einsetzstellung zwangsläufig im Bereich der Radialdurchbrechungen 11, in denen die Schneidelemente 5 aufgenommen sind, angeordnet ist. Die Schneidelemente 5 liegen mit ihren unteren, bohrungsseitigen Enden auf dem konischen Stellabschnitt 20 auf, wobei das Ende der Schneidelemente 5 bevorzugt ebenfalls schräg verlaufend ist, bevorzugt dem Winkel des Stellabschnitts (der bevorzugt zwischen 5 - 7°, z.B. ca. 6° beträgt) entsprechend.

Ersichtlich kann also das Einstellelement 6 über die Gewindeführung, realisiert über das Innengewinde 8 am Werkzeugkörper 2 und das Außengewinde 14 am Einstellelement 6, in der Bohrung 7 längsbewegt werden, es kann etwas tiefer in respektive etwas weiter aus der Bohrung geschraubt werden. Hierbei kommt es zwangsläufig zu einer Axialverstellung des konischen Stellabschnitts 20 relativ zu den werkzeugkörperseitigen, in den Radialdurchbrechungen 11 aufgenommenen Schneidelementen 5, die am Stellabschnitt 20 aufliegen. Da sich dieser von der Stirnfläche 16 kommend verjüngt, kommt es bei einer Längsbewegung des Stellelements 6 zwangsläufig zu einer simultanen, gleichförmigen Radialbewegung der am Stellabschnitt anliegenden Schneidelemente 5, und zwar je nach Bewegungsrichtung des Einstellelements 6 entweder radial weiter aus dem Werkzeugkörper (dann zwangsgeführt) oder weiter in den Werkzeugkörper (dann manuell).

Fig. 6 zeigt in einer Schnittansicht den Werkzeugkörper 2 sowie das eingesetzte Einstellelement 6 nebst Schneidelementen 5.

Ersichtlich ist das Außengewinde 14 in das Innengewinde 8 der Bohrung 7 eingeschraubt. Die beiden Führungsabschnitte 17 liegen, eine Linearführung bildend, an der Mantelfläche des zylindrischen Abschnitts 18 der Bohrung 7 an. Die Gewindebohrung 9 mündet ersichtlich im Bereich der Ringnut 19, so dass folglich die Arretierschraube 10, wenn sie eingeschraubt ist, gegen den Nutgrund verschraubt wird. Infolge der Führung respektive Anlage der Führungsabschnitte 17 in der Bohrung 7 kommt es dabei zu keiner Kippbewegung des Einstellelements 6.

Ferner ist aus Fig. 6 ersichtlich, dass die Schneidelemente 5 mit ihren schrägen Enden 21 auf der Fläche des konischen Stellabschnitts 20 aufliegen. Wird nun angenommenermaßen das Einstellelement 6 tiefer in die Bohrung 7, also nach rechts, verschraubt, so laufen die Schneidelemente 5 auf und werden zwangsläufig weiter nach außen geschoben. Nachdem alle Schneidelemente 5 gemeinsam an dem Stellabschnitt 20 anliegen, werden folglich alle auch gemeinsam radial nach außen geschoben. Nach Erreichen der gewünschten Einstellposition erfolgt sodann die Arretierung des Einstellelements 6 wie auch der Schneidelemente 5, indem die Arretierschrauben 10 und 13 fixiert werden.

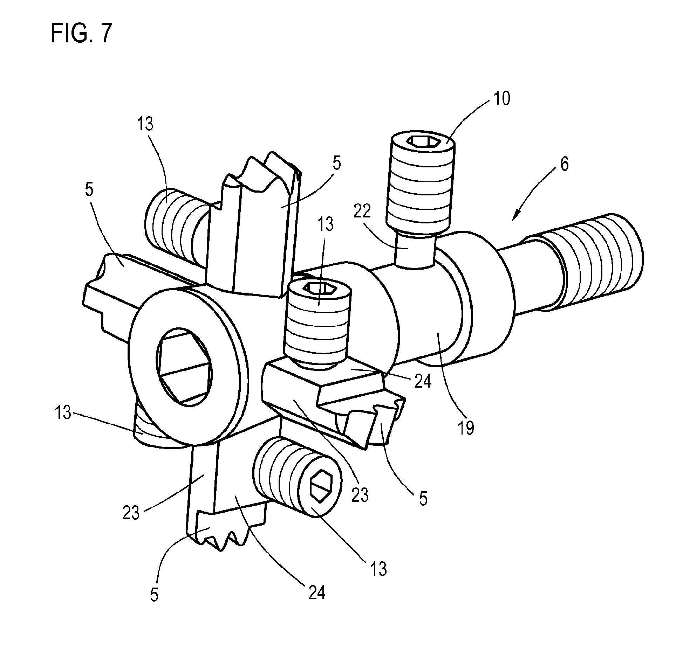

Dies ist letztlich aus Fig. 7 ersichtlich, die der Übersichtlichkeit halber unter Weglassung des Werkzeugkörpers die Anordnung der Schneidelemente 5 relativ zum Einstellelement 6 sowie die einzelnen Arretierschrauben 10, 13 zeigt.

Ersichtlich greift in der Arretierstellung die Arretierschraube 10, hier eine einfache Madenschraube, mit dem vorlaufenden verjüngten Abschnitt 22 am Grund der Ringnut 19 an. In der Montagestellung ist sie in der radialen Gewindebohrung 9 des Werkzeugkörpers 2 verschraubt.

Die Arretierschrauben 13, ebenfalls einfache Madenschrauben, sind in der Montagestellung tangential zum Werkzeugkörper angeordnet, das heißt, dass die jeweiligen Gewindebohrungen am Werkzeugkörper 2 tangential geführt sind. Sie sind folglich senkrecht relativ zu den radial verlaufenden Schneidelementen 5 angeordnet. Die Schneidelemente 5 weisen am eigentlichen Schneidelementkörper 23 eine Arretierfläche 24 auf, an der die jeweilige Arretierschraube 13 angreift. Da die Querschnittsform der Radialdurchbrechung 11 im Wesentlichen der Querschnittsform des Schneidelementkörpers 23 entspricht, ist folglich einerseits eine sichere, verkippungsfreie radiale Linearführung gegeben, wie hierüber auch sichergestellt ist, dass beim Festschrauben der Arretierschrauben 13 keine Verkippung der Schneidelemente 5 erfolgt, da diese sicher in der jeweiligen Radialdurchbrechung gegengelagert sind.

Zur Vornahme einer Justage ist es lediglich erforderlich, die Arretierschrauben 10 und 13 zu lösen, so dass das Einstellelement 6 längs der Bohrung 7 verschraubt werden kann, bis die gewünschte Einstellposition erreicht ist, wonach die Arretierschrauben 10 und 13 wieder verschraubt und folglich die einzelnen Teile gekontert und arretiert werden.

Gleichermaßen einfach gestaltet sich der Wechsel der Schneidelemente. In diesem Fall ist es lediglich erforderlich, die Arretierschrauben 13 zu öffnen und die Schneidelemente 5 aus den Radialdurchbrechungen 11 zu entnehmen und neue Schneidelemente einzusetzen. Diese können der gleichen Bearbeitungsaufgabe dienen, können aber auch zur Durchführung einer anderen Bearbeitungsaufgabe ausgebildet sein, da es hierzu ja lediglich auf die Form der einzelnen Schneidflächen ankommt. Schließt sich eine Justierung an, wäre wiederum die Arretierschraube 10 zur Ermöglichung einer Längsverstellung des Einstellelements 6 zu öffnen und nach Durchführung der Justage neben den Arretierschrauben 10 zu verschrauben.

## Patentansprüche

1. Werkzeug zur Materialbearbeitung, umfassend einen länglichen Werkzeugkörper mit mehreren radial abstehenden Schneidelementen, **dadurch gekennzeichnet, dass** im Werkzeugkörper (2) stirnseitig eine Bohrung (7) vorgesehen ist, in die Radialdurchbrechungen (11) münden, in denen die Schneidelemente (5) längsbeweglich aufgenommen sind, in welcher Bohrung (7) ein Einstellelement (6) längsbeweglich aufgenommen ist, das einen konischen Stellabschnitt (20) aufweist, an dem die Schneidelemente (5) anliegen, wobei das Einstellelement (6) und die Schneidelemente (5) in der Einstellposition arretierbar sind.

2. Werkzeug nach Anspruch 1, **dadurch gekennzeichnet, dass** in der Bohrung (7) ein Innengewinde (8) ausgebildet ist, in das das Einstellelement (6) über ein Außengewinde (14) einschraubbar ist.

3. Werkzeug nach Anspruch 2, **dadurch gekennzeichnet, dass** das Innen- und das Außengewinde (8, 14) als Feingewinde ausgeführt sind.

4. Werkzeug nach Anspruch 2 oder 3, **dadurch gekennzeichnet, dass** das Außengewinde (14) am vorlaufend in die Bohrung (7) einzuführenden Ende des Einstellelements (6) ausgebildet ist.

5. Werkzeug nach einem der Ansprüche 2 bis 4, **dadurch gekennzeichnet, dass** an der freiliegenden Stirnfläche (16) des Einstellelements (6) eine Aufnahme (15), insbesondere ein Inbus für ein Stellwerkzeug vorgesehen ist.

6. Werkzeug nach einem der vorangehenden Ansprüche, **dadurch gekennzeichnet, dass** der konische Stellabschnitt (20) am nachlaufend in die Bohrung (7) einzuführenden Ende vorgesehen ist, wie auch die Radialdurchbrechungen (11) stirnflächennah ausgebildet sind.

7. Werkzeug nach einem der vorangehenden Ansprüche, **dadurch gekennzeichnet, dass** der Konuswinkel des Stellabschnitts (20) kleiner 10°, insbesondere kleiner 8° ist, und vorzugsweise zwischen 5 - 7° beträgt.

8. Werkzeug nach einem der vorangehenden Ansprüche, **dadurch gekennzeichnet, dass** am Einstellelement (6) wenigstens ein zylindrischer Führungsabschnitt (17) vorgesehen ist, der der Linearführung des Einstellelements (6) in der Bohrung (7) dient.

9. Werkzeug nach Anspruch 8, **dadurch gekennzeichnet, dass** zwei axial voneinander über eine Ringnut (19) beabstandete Führungsabschnitte (17) vorgesehen sind, wobei am Werkzeugkörper (2) eine in der Ringnut (19) mündende, vorzugsweise radiale, Bohrung, insbesondere eine Gewindebohrung (9) zur Aufnahme eines zur Arretierung des Einstellelements (6) in der Einstellposition am Ringnutgrund angreifenden Arretierelements, insbesondere einer Arretierschraube (10) vorgesehen ist.

10. Werkzeug nach einem der vorangehenden Ansprüche, **dadurch gekennzeichnet, dass** in jede ein Schneidelement (5) aufnehmende Radialdurchbrechung (11) eine Bohrung, insbesondere Gewindebohrung (12) zur Aufnahme eines zur Arretierung eines Schneidelements (5) in der Einstellposition am Schneidelement (5) angreifenden Arretierelements, insbesondere einer Arretierschraube (13), mündet.

11. Werkzeug nach Anspruch 10, **dadurch gekennzeichnet, dass** die jeweilige Bohrung (12) tangential verläuft, oder von der Stirnseite kommend axial verläuft.

12. Werkzeug nach einem der vorangehenden Ansprüche, **dadurch gekennzeichnet, dass** wenigstens zwei um 180° versetzt angeordnete Schneidelemente (5), insbesondere drei um 120° versetzt angeordnete Schneidelemente (5), vorzugsweise vier um 90° versetzt angeordnete Schneidelemente (5) vorgesehen sind.
